# EUROPEAN PATENT APPLICATION

(11) **EP 3 854 658 A1**
(43) Date of publication of application: **28.07.2021**
(21) Application number: 18940095.5
(22) Date of filing: 17.12.2018
(51) Int. Cl.: B61L 25/02, B60T 7/12

(54) **AUXILIARY ALIGNMENT PARKING SYSTEM AND METHOD FOR RAIL TRANSIT VEHICLE**

(30) Priority: 15.11.2018 CN 201811359425
(71) Applicant: CRRC Zhuzhou Locomotive Co., Ltd., Zhuzhou, Hunan 412001 (CN)
(72) Inventor: ZHOU, Ande, Zhuzhou, Hunan 412001 (CN); MA, Lili, Zhuzhou, Hunan 412001 (CN); CHEN, Jianhua, Zhuzhou, Hunan 412001 (CN); LI, Xining, Zhuzhou, Hunan 412001 (CN); LI, Tingfang, Zhuzhou, Hunan 412001 (CN)
(74) Representative: Sharman, Thomas Alexander
(86) International application number: PCT/CN2018/121550
(87) International publication number: WO 2020/098049

(57) **Abstract**

An auxiliary alignment parking system and method for a rail transit vehicle. The parking system comprises: a parking prompt device (1); a speed acquisition device (2) for acquiring the running speed of a rail transit vehicle in real time; a calculation trigger device (3) for generating a parking position calculation signal when the driver's cab of the rail transit vehicle reaches a position indicated by a parking sign provided beside a track; and a vehicle controller (4), for calculating, in real time according to the running speed after receiving the parking position calculation signal, a parking distance required for the rail transit vehicle to park from a preset parking position thereof to the position indicated by the parking sign, and controlling, when determining according to the parking distance that the rail transit vehicle reaches the parking position, the parking prompt device to send parking prompt information to prompt the driver to perform a parking operation, so that the rail transit vehicle parks according to the parking distance. The present invention enables a rail transit vehicle to accurately park from a preset parking position to a position indicated by a parking sign, reduces the driving burden of a driver, and improves the vehicle operation safety.

## Description

The present application claims the priority to Chinese Patent Application No.201811359425.6, titled "AUXILIARY ALIGNMENT PARKING SYSTEM AND METHOD FOR RAIL TRANSIT VEHICLE", filed on November 15, 2018 with the National Intellectual Property Administration, PRC, which is incorporated herein by reference in its entirety.

### FIELD

The present disclosure relates to the technical field of rail transit, and in particular to an auxiliary alignment parking system and method for a rail transit vehicle.

### BACKGROUND

With the rapid development of the rail transit industry, the running speed of rail transit vehicles continues to increase. At present, rail transit vehicles are usually required to stop at a designated position among the platform smoothly and accurately in actual operations. For example, a certain carriage of a rail transit vehicle stops at a designated position, or a certain door stops at a designated position, or the rear of the vehicle stops at a designated position, etc.

Conventionally, rail transit vehicles have two driving modes: the automatic driving mode and the manual driving mode. Due to the high cost of the automatic driving mode, the manual driving mode is usually used. The manual driving mode requires manual operations of rail transit vehicles, and for drivers of rail transit vehicles, the operation of rail transit vehicles relies on sensory judgment. Thus, it is difficult to stop the vehicle accurately at the designated position among the platform. Moreover, during the parking process of rail transit vehicles, drivers have to judge in real time whether the braking point is appropriate, which thereby increases the driving burden of the drivers. If the parking process of rail transit vehicles makes drivers mentally exhausted, the vehicle operation safety will be reduced.

Therefore, how to provide solutions to the above technical problems is a task to be solved by those skilled in the art.

### SUMMARY

An object of the present disclosure is to provide an auxiliary alignment parking system and method for a rail transit vehicle, so that a preset parking point of the rail transit vehicle accurately parks at the position indicated by a parking sign, and the driving burden of the driver is reduced and the vehicle operation safety is improved.

To solve the above technical problems, an auxiliary alignment parking system for a rail transit vehicle is provided according to the present disclosure, comprising:
a braking prompt device;
a speed acquisition device, for acquiring a running speed of a rail transit vehicle in real time;
a calculation trigger device, for generating a braking point calculation signal when a driver's cab of the rail transit vehicle reaches a position indicated by a parking sign provided beside a track, and
a vehicle controller, connected with the braking prompt device, the speed acquisition device, and the calculation trigger device, for calculating, in real time according to the running speed after receiving the braking point calculation signal, a braking distance required for the rail transit vehicle to cause a preset parking point of the rail transit vehicle to stop at the position indicated by the parking sign, and controlling, when determining that the rail transit vehicle reaches the braking point according to the braking distance, the braking prompt device to send a braking prompt message to prompt the driver to perform a braking operation, so that the rail transit vehicle brakes according to the braking distance.

Preferably, the speed acquisition device comprises:
non-powered shaft speed sensors, installed on a non-powered bogie of the rail transit vehicle and for acquiring speed information of the rail transit vehicle in real time, and
where the vehicle controller is configured to calculate, in real time after receiving the braking point calculation signal, a first average speed of the speed information sent by all of the non-powered shaft speed sensors, and set the first average speed as the running speed of the rail transit vehicle.

Preferably, the speed acquisition device further comprises:
power shaft speed sensors, installed on a power bogie of the rail transit vehicle and for acquiring the speed information of the rail transit vehicle in real time, and
where the vehicle controller is further configured to, if all of the non-powered shaft speed sensors fail, calculate, in real time after receiving the braking point calculation signal, a second average speed of the speed information sent by all of the power shaft speed sensors, and set the second average speed as the running speed of the rail transit vehicle.

Preferably, the braking prompt device comprises an external display, and
where the vehicle controller is configured to control, when determining that the rail transit vehicle reaches the braking point according to the braking distance, the external display to display the braking prompt message, where the braking prompt message indicates that the rail transit vehicle reaches the braking point.

Preferably, the braking prompt device comprises an alarm, and
where the vehicle controller is further configured to control, when determining that the rail transit vehicle reaches the braking point according to the braking distance, the alarm to set off.

Preferably, the calculation trigger device is a physical button, a physical switch or a virtual button displayed on the external display, and
where the calculation trigger device is configured to generate the braking point calculation signal after receiving a trigger command, and where, the time receiving the trigger command is the time when the driver's cab of the rail transit vehicle reaches the position indicated by the parking sign provided beside the track.

Preferably, if the calculation trigger device is a physical button or a physical switch, the vehicle controller and the calculation trigger device are in a two-wire connection by hard wiring, and
where the vehicle controller is configured to collect the braking point calculation signal by the hard wiring between the vehicle controller and the calculation trigger device.

Preferably, the number of the preset parking points of the rail transit vehicle is N, and *N* is an integer greater than 1;
where the vehicle controller comprises:
a braking distance calculation module, for calculating, in real time according to the running speed after receiving the braking point calculation signal, N braking distances respectively required for the rail transit vehicle to cause the N preset parking points to stop at the position indicated by the parking sign, and
a braking prompt module, for controlling, when determining that the rail transit vehicle reaches the braking point corresponding to a preset parking point according to the braking distance corresponding to the preset parking point, the braking prompt device to send a braking prompt message exclusive to the preset parking point so as to prompt the driver to perform a braking operation when receiving the braking prompt message exclusive to a target parking point, so that the rail transit vehicle brakes according to the braking distance corresponding to the target parking point; where the target parking point is a parking point selected from the N preset parking points.

Preferably, the vehicle controller is further configured to determine in real time whether the running speed is greater than a preset speed threshold; if not, execute the subsequent calculation operations after receiving the braking point calculation signal; if so, do no operations after receiving the braking point calculation signal.

To solve the above technical problems, an auxiliary alignment parking method for a rail transit vehicle, which is applied to any one of the above auxiliary alignment parking system for a rail transit vehicle, is provided according to the present disclosure, comprising:
acquiring a running speed of a rail transit vehicle in real time by a speed acquisition device;
generating a braking point calculation signal by a calculation trigger device when the driver's cab of the rail transit vehicle reaches a position indicated by a parking sign provided beside a track, and
calculating by a vehicle controller, in real time according to the running speed after receiving the braking point calculation signal, a braking distance required for the rail transit vehicle to cause a preset parking point of the rail transit vehicle to stop at the position indicated by the parking sign, and controlling by the vehicle controller, when determining that the rail transit vehicle reaches the braking point according to the braking distance, the braking prompt device to send a braking prompt message to prompt the driver to perform a braking operation, so that the rail transit vehicle brakes according to the braking distance.

The present disclosure provides an auxiliary alignment parking system for a rail transit vehicle, which comprises a braking prompt device; a speed acquisition device for acquiring a running speed of a rail transit vehicle in real time; a calculation trigger device for generating a braking point calculation signal when a driver's cab of the rail transit vehicle reaches a position indicated by a parking sign provided beside a track; a vehicle controller, connected with the braking prompt device, the speed acquisition device, and the calculation trigger device, for calculating, in real time according to the running speed after receiving the braking point calculation signal, a braking distance required for the rail transit vehicle to cause a preset parking point of the rail transit vehicle to stop at the position indicated by the parking sign, and controlling, when determining that the rail transit vehicle reaches the braking point according to the braking distance, the braking prompt device to send a braking prompt message to prompt the driver to perform a braking operation, so that the rail transit vehicle brakes according to the braking distance.

A parking sign is set beside the track to indicate a designated position on the platform according to the present disclosure. When the driver's cab of the rail transit vehicle reaches the designated position on the platform, the calculation trigger device sends a braking point calculation signal to the vehicle controller. Since the vehicle controller has known the distance between the preset parking point and the driver's cab, it can determine the braking point for the rail transit vehicle according to the vehicle running speed acquired by the speed acquisition device under the condition of ensuring that the preset parking point stops at the designated position on the platform. When the rail transit vehicle reaches the braking point, the vehicle controller controls the braking prompt device to send a braking prompt message to prompt the driver to perform a braking operation. Then the rail transit vehicle brakes according to the braking distance, so that the preset parking point of the rail transit vehicle accurately stops at the designated position on the platform. Moreover, the present disclosure does not require the driver to determine whether the braking point is appropriate, and thus the driving burden of drivers is reduced and the safety of vehicle running is improved.

The present disclosure further provides an auxiliary alignment parking method for a rail transit vehicle, which has the same beneficial effects as the above auxiliary alignment parking system.

### BRIEF DESCRIPTION OF THE DRAWINGS

The drawings to be used in the description of the embodiments or the conventional technology will be described briefly as follows, so that the technical solutions according to the embodiments of the present disclosure will become clearer. It is apparent that the drawings in the following description only illustrate some embodiments of the present disclosure. For those skilled in the art, other drawings may be obtained according to these drawings without any creative work.
Figure 1 shows a structural schematic diagram of an auxiliary alignment parking system for a rail transit vehicle according to the present disclosure;
Figure 2 shows a structural schematic diagram of another auxiliary alignment parking system for a rail transit vehicle according to the present disclosure;
Figure 3 shows a principle analysis diagram of auxiliary alignment parking for a rail transit vehicle according to the present disclosure, and
Figure 4 shows a flow chart of an auxiliary alignment parking method for a rail transit vehicle according to the present disclosure.

### DETAILED DESCRIPTION OF EMBODIMENTS

A core of the present disclosure is to provide an auxiliary alignment parking system and method for a rail transit vehicle so that a preset parking point of the rail transit vehicle accurately stops at the position indicated by a parking sign. Thus, the driving burden of drivers is reduced and the safety of vehicle running is improved.

In the following, in order to make the objectives, technical solutions and advantages of the embodiments of the present disclosure clearer, the technical solutions of the embodiments of the present disclosure will be described clearly and completely in conjunction with the accompanying drawings of the embodiments of the present disclosure. Obviously, the described embodiments are only part of embodiments of the present disclosure. All other embodiments obtained by those skilled in the art based on these embodiments of the present disclosure without any creative work fall within the scope of protection of the present disclosure.

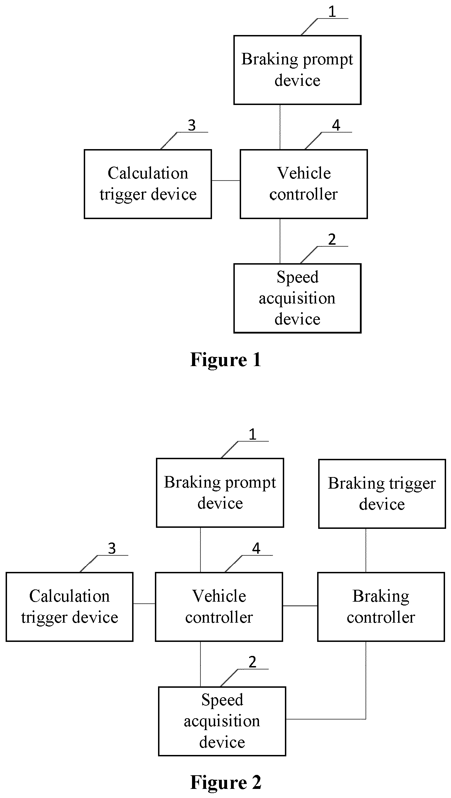

Reference is made to Figure 1, which shows a structural schematic diagram of an auxiliary alignment parking system for a rail transit vehicle according to the present disclosure.

The auxiliary alignment parking system for a rail transit vehicle comprises:
a braking prompt device 1;
a speed acquisition device 2, for acquiring a running speed of a rail transit vehicle in real time;
a calculation trigger device 3, for generating a braking point calculation signal when the driver's cab of the rail transit vehicle reaches a position indicated by a parking sign provided beside a track, and
a vehicle controller 4, connected with the braking prompt device 1, the speed acquisition device 2, and the calculation trigger device 3, for calculating, in real time according to the running speed after receiving the braking point calculation signal, a braking distance required for the rail transit vehicle to cause a preset parking point of the rail transit vehicle to stop at the position indicated by the parking sign, and controlling, when determining that the rail transit vehicle reaches the braking point according to the braking distance, the braking prompt device 1 to send a braking prompt message to prompt the driver to perform a braking operation, so that the rail transit vehicle brakes according to the braking distance.

It should be noted that the preset herein refers to set in advance and it only needs to be set once. Unless changes are needed according to actual situations, it does not need to be reset.

Specifically, in the disclosure, the auxiliary alignment parking system for a rail transit vehicle comprises a braking prompt device 1, a speed acquisition device 2, a calculation trigger device 3, and a vehicle controller 4. The parking principles are the following.

A parking sign is installed in advance next to the track on which the rail transit vehicle runs according to the present disclosure. The position indicated by the parking sign represents the position where the preset parking point on the rail transit vehicle (such as a certain carriage, a certain door, or the rear of the rail transit vehicle) stops at.

During the rail transit vehicle runs, the speed acquisition device 2 acquires a running speed of a rail transit vehicle (referred to as the vehicle running speed) in real time, and sends the vehicle running speed to the vehicle controller 4 in real time. When the driver's cab of the rail transit vehicle (situated at the front of the rail transit vehicle) reaches the position indicated by the parking sign provided beside the track, the calculation trigger device 3 generates a braking point calculation signal and sends it to the vehicle controller 4.

After receiving the braking point calculation signal, the vehicle controller 4 calculates in real time a run-forward distance (indicated by LI) of the rail transit vehicle relative to the position indicated by the parking sign (the integral of the vehicle running speed over time equals the vehicle running distance) according to the vehicle running speed, that is the real-time distance between the driver's cab of the rail transit vehicle and the position indicated by the parking sign.

Since the vehicle controller 4 has known in advance a distance (indicated by L) between the driver's cab of the rail transit vehicle and the preset parking point, in order to ensure that the preset parking point of the rail transit vehicle stops at the position indicated by the parking sign, the vehicle controller 4, after receiving the braking point calculation signal, calculates according to the vehicle running speed a distance that is available for the rail transit vehicle to run after the rail transit vehicle brakes, i.e., the braking distance (indicated by L2).

It can be seen that when the run-forward distance of the rail transit vehicle relative to the position indicated by the parking sign equals the distance between the driver's cab of the rail transit vehicle and the preset parking point minus the distance that is available for the rail transit vehicle to run after the rail transit vehicle brakes, i.e., L1 = L - L2, the rail transit vehicle reaches the braking point corresponding to the preset parking point. If the rail transit vehicle brakes at this moment, it is ensured that the preset parking point of the rail transit vehicle accurately stops at the position indicated by the parking sign.

Therefore, the vehicle controller 4 sets the distance of L - L2 as a target run-forward distance of the rail transit vehicle relative to the position indicated by the parking sign. When the run-forward distance L1 of the rail transit vehicle relative to the position indicated by the parking sign is equal to the target run-forward distance, it is determined that the rail transit vehicle reaches the braking point corresponding to the preset parking point. Thus, at this time, the vehicle controller 4 controls the braking prompt device 1 to send the braking prompt message so as to prompt the driver in the driver's cab that the rail transit vehicle reaches the braking point corresponding to the preset parking point, and braking at this moment ensures that the preset parking point accurately stops at the position indicated by the parking sign.

Thus, the driver may trigger the braking trigger device of the rail transit vehicle (the brake trigger device here may be a brake handle or a brake lever or a brake valve) according to the braking prompt message. The braking trigger device generates a braking trigger signal when it is triggered, and sends the braking trigger signal to a braking controller (the braking controller and the braking trigger device are in a two-wire connection by hard wiring to achieve redundancy backup). When receiving the braking trigger signal, the braking controller controls the rail transit vehicle to brake safely and steadily (as shown in Figure 2) according to the braking distance L2 (acquired from the vehicle controller 4) so as to ensure that the preset parking point accurately stops at the position indicated by the parking sign.

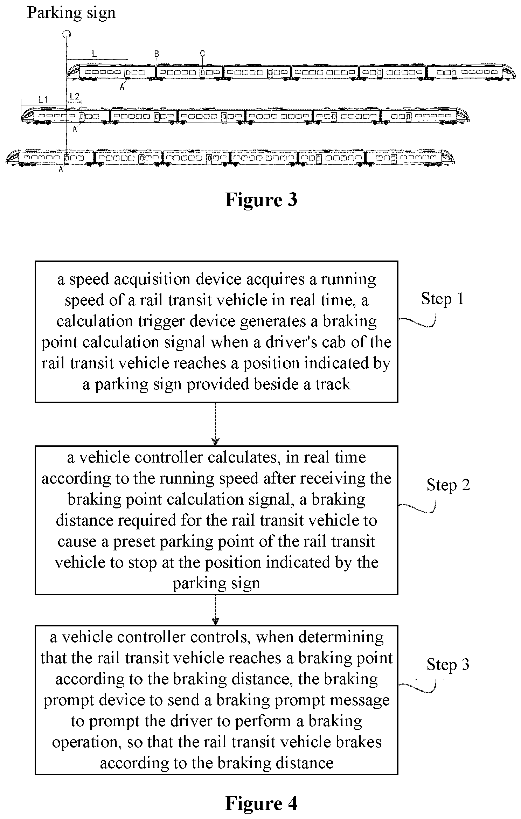

For example, reference is made to Figure 3, which shows a principle analysis diagram of auxiliary alignment parking for a rail transit vehicle according to the present disclosure. The first door A is functioned as the preset parking point of the rail transit vehicle in advance. Suppose that the distance between the first door A and the driver's cab of the rail transit vehicle is L, the run-forward distance of the rail transit vehicle relative to the position indicated by the parking sign is L, and the braking distance is L2. Thus, when the driver's cab reaches the position indicated by the parking sign (as the schematic diagram of the rail transit vehicle shown at the upper of Figure 3), the braking point calculation is triggered. When L1 = L - L2 (as the schematic diagram of the rail transit vehicle shown at the middle of Figure 3), the rail transit vehicle reaches the braking point, and the driver operates to brake the rail transit vehicle. The first door A of the rail transit vehicle finally stops at the position indicted by the parking sign (as the schematic diagram of the rail transit vehicle shown at the bottom of Figure 3). Similarly, the first through passage B or the second door C may be functioned as the preset parking point of the rail transit vehicle.

The present disclosure provides the auxiliary alignment parking system for a rail transit vehicle, which comprises the braking prompt device; the speed acquisition device for acquiring the running speed of the rail transit vehicle in real time; the calculation trigger device for generating the braking point calculation signal when the driver's cab of the rail transit vehicle reaches the position indicated by the parking sign provided beside the track; and the vehicle controller, connected with the braking prompt device, the speed acquisition device, and the calculation trigger device, for calculating, in real time according to the running speed after receiving the braking point calculation signal, the braking distance required for the rail transit vehicle to cause the preset parking point of the rail transit vehicle to stop at the position indicated by the parking sign, and controlling, when determining that the rail transit vehicle reaches the braking point according to the braking distance, the braking prompt device to send a braking prompt message to prompt the driver to perform a braking operation, so that the rail transit vehicle brakes according to the braking distance.

A parking sign is set beside the track to indicate a designated position on the platform according to the present disclosure. When the driver's cab of the rail transit vehicle reaches the designated position on the platform, the calculation trigger device sends a braking point calculation signal to the vehicle controller. Since the vehicle controller has known the distance between the preset parking point and the driver's cab, it can determine the braking point for the rail transit vehicle according to the vehicle running speed acquired by the speed acquisition device under the condition of ensuring that the preset parking point stops at the designated position on the platform. When the rail transit vehicle reaches the braking point, the vehicle controller controls the braking prompt device to send a braking prompt message to prompt the driver to perform a braking operation. Then the rail transit vehicle brakes according to the braking distance, so that the preset parking point of the rail transit vehicle accurately stops at the designated position on the platform. Moreover, the present disclosure does not require the driver to determine whether the braking point is appropriate, and thus the driving burden of drivers is reduced and the vehicle operation safety is improved.

Based on the above embodiment:

In a preferred embodiment, the speed acquisition device 2 comprises:
non-powered shaft speed sensors, installed on a non-powered bogie of the rail transit vehicle and for acquiring speed information of the rail transit vehicle in real time, and
the vehicle controller is configured to calculate, in real time after receiving the braking point calculation signal, a first average speed of the speed information sent by all of the non-powered shaft speed sensors, and set the first average speed as the running speed of the rail transit vehicle.

Specifically, in the present disclosure, the speed sensor (referred to as non-power shaft speed sensor) is installed on each non-powered bogie (a bogie without a motor) of the rail transit vehicle. Each non-power shaft speed sensor acquires the speed information of the rail transit vehicle in real time (the speed information here represents the vehicle running speed), and sends the speed information to the vehicle controller 4 in real time.

Since the speed information of the rail transit vehicle acquired by each non-power shaft speed sensor may indicate the vehicle running speed, in order to acquire the vehicle running speed more accurately to correctly calculate the barking point for the vehicle, the vehicle controller 4 calculates a first average speed of the speed information sent by each non-power shaft speed sensor (where the first average speed = the total speed of the speed information sent by all the non-powered shaft speed sensors ÷ the total number of pieces of the speed information sent by all the non-powered shaft speed sensors) and set the first average speed as the running speed of the rail transit vehicle.

In a preferred embodiment, the speed acquisition device 2 further comprises:
power shaft speed sensors, installed on a power bogie of the rail transit vehicle and for acquiring the speed information of the rail transit vehicle in real time, and
the vehicle controller 4 is further configured to, if all of the non-powered shaft speed sensors fail, calculate, in real time after receiving the braking point calculation signal, a second average speed of the speed information sent by all of the power shaft speed sensors, and set the second average speed as the running speed of the rail transit vehicle.

Further, considering that the non-power shaft speed sensor may fail, in the present disclosure, the speed sensor (referred to as power shaft speed sensor) is installed on each power bogie (a bogie with a motor installed) of the rail transit vehicle. Each power shaft speed sensor acquires the speed information of the rail transit vehicle in real time, and sends the speed information to the vehicle controller 4 in real time.

Since the speed information of the rail transit vehicle acquired by each power shaft speed sensor may indicate the vehicle running speed, thus in the case that all non-power shaft speed sensors fail, the vehicle controller 4 calculates the second average speed of the speed information sent by each power shaft speed sensor (the second average speed = the total speed of the speed information sent by all the power shaft speed sensors ÷ the total number of pieces of the speed information sent by all the power shaft speed sensors), and set the second average speed value as the running speed of the rail transit vehicle.

It can be seen that the present disclosure preferably utilizes the speed information sent by the non-powered shaft speed sensors (more accurate than the power shaft speed sensors), and utilizes the speed information sent by the power shaft speed sensor only when all the non-powered shaft speed sensors fail.

In a preferred embodiment, the braking prompt device 1 further comprises an external display, and
the vehicle controller 4 is configured to control, when determining that the rail transit vehicle reaches the braking point according to the braking distance, the external display to display the braking prompt message, where the braking prompt message indicates that the rail transit vehicle reaches the braking point.

Specifically, in the present disclosure, the braking prompt device 1 may choose an external display (set at a position convenient for the driver to view), and the external display displays the braking prompt message corresponding to the preset parking point (pictures and/or text prompts may be utilized), which plays the role of prompting the driver to perform a braking operation. In addition, the vehicle controller 4 may also send the running information of the rail transit vehicle (such as braking distance, braking duration, etc.) to the external display for the driver to view.

In a preferred embodiment, the braking prompt device 1 comprises an alarm, and
the vehicle controller 4 is further configured to control, when determining that the rail transit vehicle reaches the braking point according to the braking distance, the alarm to set off.

Further, the braking prompt device 1 in the present disclosure comprises an alarm, such as an audible and visual alarm. When the vehicle controller 4 determines that the rail transit vehicle reaches the braking point corresponding to the preset parking point according to the braking distance, the vehicle controller controls the alarm to set off, so that the driver can be prompted to brake the vehicle without viewing the external display to avoid missing the braking time.

In a preferred embodiment, the calculation trigger device 3 is a physical button, a physical switch or a virtual button displayed on the external display, and
the calculation trigger device 3 is configured to generate a braking point calculation signal after receiving a trigger command, where the time receiving the trigger command is the time when the driver's cab of the rail transit vehicle reaches the position indicated by the parking sign provided beside the track.

Specifically, in the present disclosure, the calculation trigger device 3 may be a trigger device such as a physical button or a physical switch or a virtual button displayed on an external display (set in a position convenient for the driver to operate). When the driver's cab of the rail transit vehicle reaches the position indicated by the parking sign provided beside the track, and if there is a parking demand at this time, the driver triggers the calculation trigger device 3, that is, sends a trigger instruction to the calculation trigger device 3. The calculation trigger device 3 generates a braking point calculation signal after receiving the trigger instruction, so that the vehicle controller 4 performs the braking point calculation.

Further, in addition to the calculation trigger device 3 provided by this embodiment, the calculation trigger device 3 may be in other implementation forms. For example, the calculation trigger device 3 includes:
a trigger detection device for generating a trigger detection signal after receiving a parking demand instruction, and
an autonomous detection device installed outside the driver's cab of the rail transit vehicle and connected to the trigger detection device for entering a detection state after receiving the trigger detection signal and generating a braking point calculation signal when detecting the parking sign provided beside the track.

For the calculation trigger device 3, when the driver's cab of the rail transit vehicle does not reach the position indicated by the parking sign and if there is a parking demand, the driver triggers the trigger detection device so that the autonomous detection device autonomously detects whether the driver's cab of the rail transit vehicle reaches the position indicated by the parking sign, so as to avoid the driver from always observing whether the driver's cab of the rail transit vehicle reaches the position indicated by the parking sign, and to further reduce the driver's driving burden.

In a preferred embodiment, if the calculation trigger device 3 is a physical button or a physical switch, the vehicle controller 4 and the calculation trigger device 3 are in a two-wire connection by hard wiring, and
the vehicle controller 4 is configured to collect the braking point calculation signal by the hard wiring between the vehicle controller and the calculation trigger device 3.

Further, if the calculation trigger device 3 is a physical button or a physical switch, the vehicle controller 4 and the calculation trigger device 3 are connected by hard wiring. Thus, the vehicle controller 4 uses the hard wiring between the vehicle controller 4 and the calculation trigger device 3 to acquire the braking point calculation signal, thereby the acquiring process is stable. In addition, the vehicle controller 4 and the calculation trigger device 3 are connected by using two hard wires, therefore if one hard wire fails, the other hard wire (in the normal state) ensures the signal transmission between the vehicle controller 4 and the calculation trigger device 3, so as to achieve redundant backup.

In a preferred embodiment, the number of the preset parking points of the rail transit vehicle is *N,* and *N* is an integer greater than 1; and
the vehicle controller 4 comprises:
a braking distance calculation module, for calculating, in real time according to the running speed after receiving the braking point calculation signal, N braking distances respectively required for the rail transit vehicle to cause the N preset parking points to stop at the position indicated by the parking sign, and
a braking prompt module, for controlling, when determining that the rail transit vehicle reaches the braking point corresponding to a preset parking point according to the braking distance corresponding to the preset parking point, the braking prompt device 1 to send a braking prompt message exclusive to the preset parking point so as to prompt the driver to perform a braking operation when receiving the braking prompt message exclusive to a target parking point, so that the rail transit vehicle brakes according to the braking distance corresponding to the target parking point, where the target parking point is a parking point selected from the N preset parking points.

Specifically, in the present disclosure, multiple parking points for rail transit vehicles may be set in advance: the first parking point, the second parking point...the *N*^{th} parking point. For each parking point, the parking principles for stops at the position indicated by the parking sign may refer to the introduction of the above parking principles.

After receiving the braking point calculation signal, the vehicle controller 4 calculates, in real time according to the running speed, each braking distance of the rail transit vehicle under the condition that each corresponding parking point stops at the position indicated by the parking sign. In addition, the vehicle controller 4 also determines whether the rail transit vehicle reaches each braking point corresponding to each parking point according to each braking distance corresponding to each parking point. When the rail transit vehicle reaches a braking point corresponding to any parking point, the vehicle controller 4 controls the braking prompt device 1 to send a braking prompt message exclusive to the parking point.

It is understandable that the braking prompt message corresponding to different parking points is different. For example, the parking prompt device 1 is an audible alarm. When the rail transit vehicle reaches the braking points corresponding to different parking points, the vehicle controller 4 controls the alarm to send different braking prompt sounds, which is convenient for the driver to distinguish. For example, when the rail transit vehicle reaches the braking point corresponding to the first parking point, the vehicle controller 4 controls the audible alarm to send a braking prompt sound of "di"; when the rail transit vehicle reaches the braking point corresponding to the second parking point, the vehicle controller 4 controls the audible alarm to send a braking prompt sound of "di", "di".

Based on the above, the driver selects a parking point (called a target parking point) from the multiple parking points. When the driver receives the braking prompt message exclusive to the target parking point, then the braking operation is performed. Then, the rail transit vehicle brakes according to the braking distance corresponding to the target parking point, thereby ensuring that the target parking point stops at the position indicated by the parking sign.

In a preferred embodiment, the vehicle controller 4 is further configured to determine in real time whether the running speed is greater than a preset speed threshold; if not, the subsequent calculation operations are executed after receiving the braking point calculation signal; if so, no operations are executed after receiving the braking point calculation signal.

Further, in order to prevent the driver from triggering the calculation trigger device 3 by mistake, a speed threshold (such as 35km/h) is set in advance in the present disclosure, and it is believed that when the vehicle running speed is greater than the set speed threshold, the rail transit vehicle has no parking demand. Therefore, the vehicle controller 4 determines in real time whether the vehicle running speed is greater than the set speed threshold. If the vehicle running speed is greater than the set speed threshold, it means that the rail transit vehicle has no parking requirement. Even if the vehicle controller 4 receives a braking point calculation signal under this situation, it shall be considered that the driver triggers the calculation trigger device 3 by mistake and the subsequent step of calculating in real time according to the running speed the *N* braking distances respectively required for the rail transit vehicle to cause the *N* preset parking points to stop at the position indicated by the parking sign is not executed. If the vehicle running speed is not greater than the set speed threshold, after the braking point calculation signal is received, the subsequent step of calculating in real time according to the running speed the N braking distances respectively required for the rail transit vehicle to cause the N preset parking points to stop at the position indicated by the parking sign is executed.

In addition, the vehicle controller 4 may also calculate the total running distance of the rail transit vehicle from the point that the driver's cab reaches the position indicated by the parking sign to the point that the rail transit vehicle stops in the present disclosure. Under the situation that rail transit vehicle accurately parks, the total running distance = the distance between the driver's cab and the target parking point, the total running distance = the distance between the driver's cab and the first door A, as shown in Figure 3. Therefore, the vehicle controller 4 may output the calculated total running distance and the distance between the driver's cab and the target parking point (or the error between the total running distance and the distance between the driver's cab and the target parking point) to the external display for the driver's reference. At this time, the driver can adjust the location of the rail transit vehicle according to the display content on the external display. During the adjustment of the rail transit vehicle by the driver, the vehicle controller 4 may calculate the current total running distance in real time and output the current total running distance in real time to the external display to provide a reference for the driver to adjust the location of the rail transit vehicle, so as to minimize the error between the total running distance and the distance between the driver's cab and the target parking point and improve the parking accuracy of the rail transit vehicle.

Reference is made to Figure 4, which shows a flow chart of an auxiliary alignment parking method for a rail transit vehicle according to the present disclosure.

An auxiliary alignment parking method for a rail transit vehicle applied to the auxiliary alignment parking system according to any one of the above embodiments comprises the following steps.

In step S1, a speed acquisition device acquires a running speed of a rail transit vehicle in real time, and a calculation trigger device generates a braking point calculation signal when the driver's cab of the rail transit vehicle reaches a position indicated by a parking sign provided beside a track;

In step S2, a vehicle controller calculates in real time a braking distance required for the rail transit vehicle to cause a preset parking point of the rail transit vehicle to stop at the position indicated by the parking sign according to the running speed after receiving the braking point calculation signal, and
In step S3, a vehicle controller, when determining that the rail transit vehicle reaches the braking point according to the braking distance, controls the braking prompt device to send a braking prompt message to prompt the driver to perform a braking operation, so that the rail transit vehicle brakes according to the braking distance.

The introduction of the auxiliary alignment parking method provided in the present disclosure may refer to the above embodiments of the auxiliary alignment parking system, and will not be repeated herein.

It should be further noted that a relationship term such as "the first" and "the second" herein is only used to distinguish one entity or operation from another entity or operation, and does not necessarily require or imply that there is an actual relationship or sequence between these entities or operations. Furthermore, terms "include", "comprise" or any other variations are intended to cover non-exclusive "include", so that a process, a method, an object or a device including a series of factors not only include the factors, but also include other factors not explicitly listed, or also include inherent factors of the process, the method, the object or the device. Without more limitation, a factor defined in a sentence "include one..." does not exclude a case that there is also another same factor in the process, the method, the object or the device including the described factor.

The above description of the embodiments enables those skilled in the art to implement or use the present disclosure. Various modifications to these embodiments are apparent to those skilled in the art, and the general principle defined herein may be implemented in other embodiments without deviating from the spirit or scope of the present disclosure. Therefore, the present disclosure is not limited to these embodiments described herein, but in accordance with the widest scope consistent with the principle and novel features disclosed herein.

## Claims

1. An auxiliary alignment parking system for a rail transit vehicle, comprising:
a braking prompt device;
a speed acquisition device, for acquiring a running speed of a rail transit vehicle in real time;
a calculation trigger device, for generating a braking point calculation signal when a driver's cab of the rail transit vehicle reaches a position indicated by a parking sign provided beside a track, and
a vehicle controller, connected with the braking prompt device, the speed acquisition device, and the calculation trigger device, for calculating, in real time according to the running speed after receiving the braking point calculation signal, a braking distance required for the rail transit vehicle to cause a preset parking point of the rail transit vehicle to stop at the position indicated by the parking sign, and controlling, when determining that the rail transit vehicle reaches a braking point according to the braking distance, the braking prompt device to send a braking prompt message to prompt the driver to perform a braking operation, so that the rail transit vehicle brakes according to the braking distance.

2. The auxiliary alignment parking system for a rail transit vehicle according to claim 1, wherein the speed acquisition device comprises:
non-powered shaft speed sensors, installed on a non-powered bogie of the rail transit vehicle and for acquiring speed information of the rail transit vehicle in real time, and
wherein the vehicle controller is configured to calculate, in real time after receiving the braking point calculation signal, a first average speed of the speed information sent by all of the non-powered shaft speed sensors, and set the first average speed as the running speed of the rail transit vehicle.

3. The auxiliary alignment parking system for a rail transit vehicle according to claim 2, wherein the speed acquisition device comprises:
power shaft speed sensors, installed on a power bogie of the rail transit vehicle and for acquiring the speed information of the rail transit vehicle in real time, and
wherein the vehicle controller is further configured to, if all of the non-powered shaft speed sensors fail, calculate, in real time after receiving the braking point calculation signal, a second average speed of the speed information sent by all of the power shaft speed sensors, and set the second average speed as the running speed of the rail transit vehicle.

4. The auxiliary alignment parking system for a rail transit vehicle according to claim 1, wherein the braking prompt device comprises an external display, and
wherein the vehicle controller is configured to control, when determining that the rail transit vehicle reaches the braking point according to the braking distance, the external display to display the braking prompt message, wherein the braking prompt message indicates that the rail transit vehicle reaches the braking point.

5. The auxiliary alignment parking system for a rail transit vehicle according to claim 4, wherein the braking prompt device comprises an alarm, and
wherein the vehicle controller is further configured to control, when determining that the rail transit vehicle reaches the braking point according to the braking distance, the alarm to set off.

6. The auxiliary alignment parking system for a rail transit vehicle according to claim 4, wherein the calculation trigger device is a physical button, a physical switch or a virtual button displayed on the external display, and
wherein the calculation trigger device is configured to generate the braking point calculation signal after receiving a trigger command, wherein the time receiving the trigger command is the time when the driver's cab of the rail transit vehicle reaches the position indicated by the parking sign provided beside the track.

7. The auxiliary alignment parking system for a rail transit vehicle according to claim 6, wherein if the calculation trigger device is a physical button or a physical switch, the vehicle controller and the calculation trigger device are in a two-wire connection by hard wiring, and
wherein the vehicle controller is configured to collect the braking point calculation signal by the hard wiring between the vehicle controller and the calculation trigger device.

8. The auxiliary alignment parking system for a rail transit vehicle according to any one of claims 1-7, wherein the number of the preset parking points of the rail transit vehicle is *N,* and N is an integer greater than 1;
wherein the vehicle controller comprises:
a braking distance calculation module, for calculating, in real time according to the running speed after receiving the braking point calculation signal, N braking distances respectively required for the rail transit vehicle to cause the N preset parking points to stop at the position indicated by the parking sign, and
a braking prompt module, for controlling, when determining that the rail transit vehicle reaches a braking point corresponding to a preset parking point according to the braking distance corresponding to the preset parking point, the braking prompt device to send a braking prompt message exclusive to the preset parking point so as to prompt the driver to perform a braking operation when receiving the braking prompt message exclusive to a target parking point, so that the rail transit vehicle brakes according to the braking distance corresponding to the target parking point, wherein the target parking point is a parking point selected from the *N* preset parking points.

9. The auxiliary alignment parking system for a rail transit vehicle according to claim 8, wherein the vehicle controller is further configured to determine in real time whether the running speed is greater than a preset speed threshold; if not, execute the subsequent calculation operations after receiving the braking point calculation signal; if so, do no operations after receiving the braking point calculation signal.

10. An auxiliary alignment parking method for a rail transit vehicle, applied to the auxiliary alignment parking system for a rail transit vehicle according to any one of claims 1-9, comprising:
acquiring a running speed of a rail transit vehicle in real time by a speed acquisition device;
generating a braking point calculation signal by a calculation trigger device when a driver's cab of the rail transit vehicle reaches a position indicated by a parking sign provided beside a track, and
calculating by a vehicle controller, in real time according to the running speed after receiving the braking point calculation signal, a braking distance required for the rail transit vehicle to cause a preset parking point of the rail transit vehicle to stop at the position indicated by the parking sign, and controlling by the vehicle controller, when determining that the rail transit vehicle reaches the braking point according to the braking distance, the braking prompt device to send a braking prompt message to prompt the driver to perform a braking operation, so that the rail transit vehicle brakes according to the braking distance.
